(19) Europäisches Patentamt
European Patent Office
Office européen des brevets

(11) Veröffentlichungsnummer: **0 278 350 B1**

(12) # EUROPÄISCHE PATENTSCHRIFT

(45) Veröffentlichungstag der Patentschrift: **15.04.92**

(51) Int. Cl.[5]: **C08L 69/00**, //(C08L69/00, 51:00)

(21) Anmeldenummer: **88101372.6**

(22) Anmeldetag: **01.02.88**

Die Akte enthält technische Angaben, die nach dem Eingang der Anmeldung eingereicht wurden und die nicht in dieser Patentschrift enthalten sind.

(54) **Antistatische, thermoplastische Formmassen auf Basis von aromatischen Polycarbonaten und Pfropfcopolymerisaten.**

(30) Priorität: **13.02.87 DE 3704487**

(43) Veröffentlichungstag der Anmeldung: **17.08.88 Patentblatt 88/33**

(45) Bekanntmachung des Hinweises auf die Patenterteilung: **15.04.92 Patentblatt 92/16**

(84) Benannte Vertragsstaaten: **DE ES FR GB IT NL**

(56) Entgegenhaltungen:
**EP-A- 0 061 692**
**EP-A- 0 210 510**

**PATENT ABSTRACTS OF JAPAN, Band 10, Nr. 239 (C-367)[2295], 19. August 1986; & JP-A-61 72 053 (TEIJIN CHEM. LTD) 14-04-1986**

**PATENT ABSTRACTS OF JAPAN, Band 8, Nr. 266 (C-255)[1703], 6. Dezember 1984; & JP-A-59 142 243 (TORAY K.K.) 15-08-1984**

**PATENT ABSTRACTS OF JAPAN, Band 10, Nr. 49 (C-330)[2106], 26. Februar 1986; & JP-A-60 195 151 (TORAY K.K.) 03-10-1985**

**Römpps Chemie-Lexikon, Band 5, Seite 3276**

(73) Patentinhaber: **BAYER AG**

**W-5090 Leverkusen 1 Bayerwerk(DE)**

(72) Erfinder: **Buysch, Hans-Josef, Dr.**
**Brandenburger Strasse 28**
**W-4150 Krefeld(DE)**
Erfinder: **Schön, Norbert, Dr.**
**Wilhelmshofallee 82**
**W-4150 Krefeld(DE)**
Erfinder: **Eichenauer, Herbert, Dr.**
**Goethestrasse 71**
**W-4047 Dormagen(DE)**
Erfinder: **Kress, Hans-Jürgen, Dr.**
**c/o Mobay Corporation Mobay Road**
**Pittsburgh, PA 15205(US)**
Erfinder: **Buekers, Josef**
**Kneinstrasse 58a**
**W-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft antistatische, thermoplastische Formmassen, bestehend aus einem thermoplastischen aromatischen Polycarbonatharz, einem Pfropfpolymerisat und gegebenenfalls einem thermoplastischen Vinylpolymerisat auf Basis von Vinylaromaten und anderen Vinylmonomeren, die als Antistatikum einen mit Polymerisaten aus (Meth) Acrylaten und/oder gegebenenfalls anderen Vinylmonomeren modifizierten Polyalkylenether enthalten.

Die meisten Kunststoffe sind aufgrund ihrer chemischen Konstitution elektrische Isolatoren mit einem hohen elektrischen Oberflächenwiderstand. Das führt bei der Verarbeitung und im Gebrauch solcher Massen leicht zur elektrostatischen Aufladung der Kunststoffoberflächen. Die Folge sind vielfältige Störungen und Belästigung in der Praxis, z.B. schnelle Verschmutzung und Verstaubung der Kunststoffteile, wobei sich charakteristische Staubfiguren an der Oberfläche ausbilden. Dies gilt im besonderen Maß auch für gegebenenfalls kautschukmodifizierte als Formmassen verwendete Polymerisate aus Vinylaromaten und Acrylnitril, z.B. Styrol-Acrylnitril-Copolymerisate (SAN) und Pfropfpolymerisate von Styrol und Acrylnitril auf Polybutadien (ABS).

Die antistatische Ausrüstung solcher Formmassen ist bekannt. Als antistatische Mittel werden z.B. Alkyl- und Arylsulfonate (DE-OS 1 544 652), Amine (DE-PS 1 258 083), quartäre Ammoniumsalze, Amide, Phosphorsäuren sowie Alkyl- und Arylphosphonate empfohlen.

Die üblichen Antistatika für Vinylaromaten-Polymerisate können in Gemischen aus diesen Vinylpolymerisaten und aromatischen Polycarbonaten nicht eingesetzt werden, da sie entweder zum Abbau des aromatischen Polycarbonats führen oder zu wenig wirksam sind.

Weiterhin beschreibt JP-A 61-72 053 antistatisch ausgerüstete Zusammensetzungen, enthaltend eine Polycarbonatkomponente, ein Pfropfcopolymerisat und ein Polyether. Aus EP-A 61 692 ist bekannt, daß thermoplastische Formmassen, enthaltend Pfropfcopolymerisate durch den Zusatz von gepfropften Polyethern antistatisch ausgerüstet werden.

Es wurde gefunden, daß man durch Bepfropfen von Polyalkylenethern mit $C_1$-$C_6$-Alkyl(meth)acrylaten, Cycloalkylacrylaten oder -methacrylaten und gegebenenfalls zusätzlich Styrol oder $\alpha$-Methylstyrol sehr gut wirksame Antistatika für Mischungen aus aromatischen Polycarbonaten und Vinylaromatpolymerisaten erhält, die die mechanischen Eigenschaften, die Oberflächeneigenschaften, Farbe und Thermostabilität der Gemische aus aromatischen Polycarbonaten und Vinylaromatpolymerisaten nicht beeinträchtigen.

Gegenstand der Erfindung sind somit antistatische, thermoplastische Formmassen aus

I. 99,8 - 95 Gew.-%, bevorzugt 99 - 97 Gew.-%, einer Mischung bestehend aus einem aromatischen Polycarbonat, einem Pfropfpolymerisat und gegebenenfalls einem thermoplastischen Vinylpolymerisat und/oder den üblichen Zusätzen und

II 0,2 bis 5 Gew.-% eines bepfropften Polyalkylenethers, der ein Reaktionsprodukt aus Polyolen und einem oder mehreren Alkylenoxiden ist und der durch Pfropfung von 5 bis 50 Gew.-% eines Polymerisats aus $C_1$-$C_6$-Alkyl(meth)acrylaten, Cycloalkylacrylaten oder -methacrylaten auf 95 bis 50 Gew.-% eines Polyalkylenethers (wie oben definiert) mit einem Molekulargewicht von 500 bis 15.000 hergestellt wird,

wobei das Polymergemisch I aus

A) 95 bis 10 Gew.-% eines thermoplastischen aromatischen Polycarbonats oder eines Gemisches mehrerer aromatischer Polycarbonate mit mittleren Gewichtsmittelmolekulargewichten $\overline{M}_W$ von 10.000 bis 200.000, wobei die Polycarbonate solche auf Basis der Diphenole der Formel (II) sind,

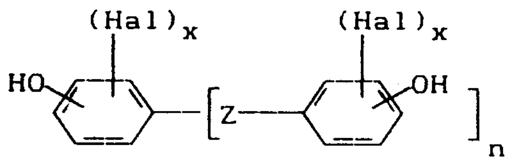

(II)

worin Z eine Einfachbindung, ein $C_1$-$C_5$-Alkylenrest, ein $C_2$-$C_5$-Alkylidenrest, ein $C_5$-$C_6$-Cycloalkylidenrest, -S- oder -$SO_2$-, Hal, Chlor oder Brom, x 0, 1 oder 2 und n 1 oder 0 sind, und gegebenenfalls der Formel (IIa)

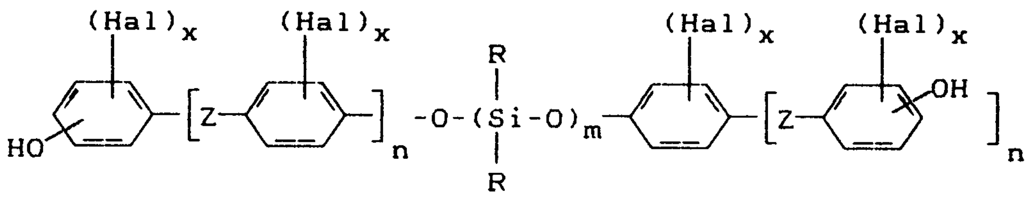

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl bedeuten und m eine ganze Zahl von 5 bis 100 ist, die Diphenole der Formel (IIa) nur für die Herstellung von Copolycarbonaten mit den Diphenolen der Formel (II) eingesetzt werden und der Gewichtsanteil der Diphenole der Formel (IIa) in den Copolycarbonaten 1 bis 20 Gew.-% ist, bezogen auf das Gesamtgewicht der Diphenole der Formel (II) und (IIa).

B) 5 bis 90 Gew.-% eines Gemisches aus

Ba) 100 bis 20 Gew.-Teilen eines oder mehrerer Pfropfpolymerisate, in denen auf einen Kautschuk (Pfropfgrundlage) Styrol, α-Methylstyrol, Methylmethacrylat oder ein Gemisch von 95 bis 50 Gew.-% Styrol, α-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituiertes Maleinimid, Methylmethacrylat oder Mischungen daraus (Pfropfauflage) pfropfpolymerisiert sind und wobei die Kautschuke in Form wenigstens partiell vernetzter Teilchen einer mittleren Teilchengröße von 0,05 bis 5 µm vorliegen,

Bb) 0 bis 80 Gew.-Teilen eines oder mehrerer thermoplastischer Vinylcopolymerisate

besteht.

Ein weiterer Gegenstand der Erfindung ist ein Verfahren zur antistatischen Ausrüstung von Mischungen aus aromatischem Polycarbonat, einem Pfropfpolymerisat und gegebenenfalls einem thermoplastischen Vinylpolymerisat, wie oben beschrieben und/oder den üblichen Zusätzen, das dadurch gekennzeichnet ist, daß man zu 99,8 bis 95 Gew.-% einer Mischung I 0,2 bis 5,0 Gew.-%, vorzugsweise 1 bis 3 Gew.-%, eines bepfropften Polyalkylenethers II (wie oben definiert) zufügt.

Das Polymergemisch I im Sinne der Erfindung besteht aus

A) 95-10 Gew,-%, bevorzugt 90-10 Gew.-% und besonders bevorzugt 85-25 Gew.-% eines thermoplastischen aromatischen Polycarbonats oder eines Gemisches mehrerer aromatischer Polycarbonate,

B) 5 - 90 Gew.-%, bevorzugt 10 - 90 Gew.-% und besonders bevorzugt 15 - 75 Gew.-% eines Gemisches aus

Ba) 100 - 0 Gew.-Teilen, bevorzugt 100 - 20 Gew.-Teilen und besonders bevorzugt 100 - 30 Gew.-Teilen eines oder mehrerer Pfropfpolymerisate und

Bb) 0 - 100 Gew.-Teilen, bevorzugt 0 - 80 Gew.-Teilen und besonders bevorzugt 0 - 70 Gew.-Teilen eines oder mehrerer thermoplastischer Vinylcopolymerisate.

Erfindungsgemäß geeignete, thermoplastische, aromatische Polycarbonate A sind solche auf Basis der Diphenole der Formel (II)

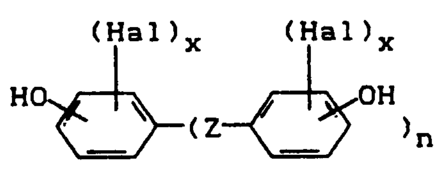

(II),

worin Z eine Einfachbindung, ein $C_1$-$C_5$-Alkylenrest, ein $C_2$-$C_5$-Alkylidenrest, ein $C_5$-$C_6$-Cycloalkylidenrest, -S-oder -$SO_2$-, Hal, Chlor oder Brom, x 0, 1 oder 2 und n 1 oder 0 sind, und gegebenenfalls der Formel (IIa)

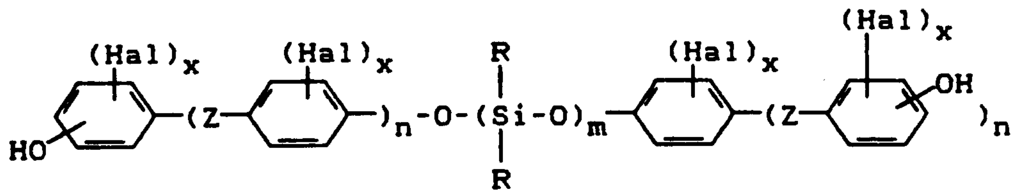

(IIa)

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl, vorzugsweise $CH_3$ bedeuten und m eine ganze Zahl von 5 bis 100, vorzugsweise von 20 bis 80, ist.

Erfindungsgemäß geeignete Polycarbonate A sind Homopolycarbonate und Copolycarbonate, wobei die Diphenole der Formel (IIa) nur für die Herstellung von Copolycarbonaten mit den Diphenolen der Formel (II) eingesetzt werden, und ihr Gewichtsanteil in den Copolycarbonaten 1 bis 20 Gew.-%, vorzugsweise 1,5 bis 15 Gew.-% und insbesondere 2 bis 10 Gew.-% ist, bezogen auf Gesamtgewicht der Diphenole der Formeln (II) und (IIa).

Die Komponente A kann auch aus Mischungen der vorstehend definierten thermoplastischen Polycarbonate bestehen wobei, wenn es sich um Mischungen mit Polydiorganosiloxanen-Polycarbonat-Blockcopolymeren handelt, der Gewichtsanteil der Diphenole (IIa), bezogen auf die Gesamtsumme der Diphenole in der Polycarbonatmischung, zwischen 1 und 20 Gew.-% liegt.

Die erfindungsgemäß geeigneten Polycarbonate A sind bekannt; sie können beispielsweise mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch bekannte Kettenabbrecher eingestellt werden kann. (Für polydiorganosiloxanhaltige Polycarbonate vgl. DE-OS 3 334 873).

Geeignete Kettenabbrecher sind beispielsweise Phenol, p-Chlorphenol, p-tert.-Butylphenol oder 2,4,6-Tribromphenol, und langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten gemäß DE-OS 3 506 472 wie 3,5-Di-tert.-butylphenol, p-iso-Octylphenol, p-tert.-Octylphenol, p-Dodecylphenol und 2-(3,5-Dimethylheptyl)-phenol und 4-(3,5-Dimethyl-heptyl)-phenol. Die Menge an einzusetzenden Kettenabbrechern beträgt im allgemeinen zwischen 0,5 Mol-% und 10 Mol-%, bezogen auf die Summe der jeweils eingesetzten Diphenole (II) und gegebenenfalls (IIa).

Die erfindungsgemäß geeigneten Polycarbonate A haben mittlere Gewichtsmittelmolekulargewichte ($\overline{M}w$, gemessen beispielsweise durch Ultrazentrifugation oder Streulichtmessung) von 10 000 bis 200 000, vorzugsweise von 20 000 bis 80 000.

Geeignete Diphenole der Formel (II) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan, 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Geeignete Diphenole der Formel (IIa) sind solche, in denen R Methyl, Ethyl, Propyl, n-Butyl, tert.-Butyl oder Phenyl ist.

Bevorzugte Diphenole der Formel (IIa) sind die der Formel (IIb)

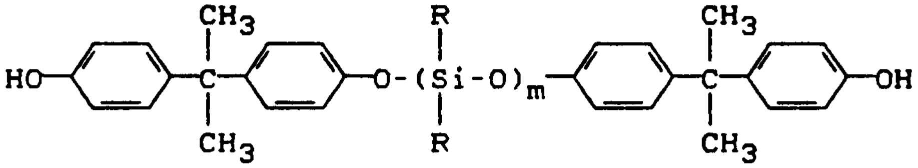 (IIb)

worin die Reste R gleich sind und die vorstehende genannte Bedeutung haben, also bevorzugt Methyl etc. oder Phenyl bedeuten und m eine ganze Zahl von 5 bis 100, vorzugsweise von 20 bis 80, ist.

Die Diphenole der Formel (IIa) können aus den entsprechenden Bis-Chlorverbindungen (III)

$$Cl-(\underset{R}{\overset{R}{|}}{Si}O)_m-\underset{R}{\overset{R}{|}}{Si}-Cl \qquad (III)$$

und den Diphenolen (II) beispielsweise gemäß US-Patent 3 419 634, in Kombination mit US-Patent 3 189 662 hergestellt werden.

In den Bis-Chlorverbindungen (III) haben R und m die Bedeutung wie in den Diphenolen (IIa) bzw. (IIb).

Die erfindungsgemäß geeigneten Polycarbonate A können in bekannter Weise verzweigt sein, vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen Gruppen.

Bevorzugte Polycarbonate sind neben dem Bisphenol A-Homopolycarbonat die Copolycarbonate von Bisphenol A mit bis zu 15 Mol-%, bezogen auf die Molsummen an Diphenolen, an 2,2-Bis-(3,5-dibrom-4-hydroxyphenyl)-propan oder die Copolycarbonate der Diphenole der Formel (II) mit 1 bis 20 Gew.-% an Diphenolen der Formel (IIa), vorzugsweise der Formel (IIb), bezogen jeweils auf die Gewichtssumme der Diphenole (II) und (IIa), bzw. (II) und (IIb).

Geeignete Pfropfpolymerisate Ba sind solche, in denen auf einen Kautschuk (Pfropfgrundlage) Styrol, α-Methylstyrol, Methylmethacrylat oder ein Gemisch von 95 - 50 Gew.-% Styrol, α-Methylstyrol, kernsubstituiertem Styrol, Methylmethacrylat oder Mischungen daraus und 5 - 50 Gew.-% Acrylnitril, Methacrylnitril, Maleinsäureanhydrid, N-substituiertes Maleinimid, Methylmethacrylat oder Mischungen daraus (Pfropfauflage) pfropfpolymerisiert sind.

Zur Herstellung der Pfropfpolymerisate Ba geeignete Kautschuke sind insbesondere Polybutadien, Butadien/Styrol-Copolymerisate (beide auch copolymerisiert mit bis zu 30 Gew.-%, bezogen auf Kautschukgewicht, eines niederen Alkylesters von Acryl-oder Methacrylsäure wie Methylmethacrylat, Ethylacrylat, Methylacrylat oder Ethylmethacrylat), Polyisopren, Polychloropren, Alkylacrylatkautschuke (aus $C_1$-$C_8$-Alkylacrylaten, insbesondere Ethyl-, Butyl-, Ethylhexylacrylat). Die Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten sowie kleinere Mengen, vorzugsweise bis zu 5 Gew.-%, bezogen auf Kautschukgewicht, vernetzend wirkender, ethylenisch ungesättigter Monomerer. Solche Vernetzer sind z.B. Alkylendiol-di-(meth)-acrylate, Polyesterdi-(meth)-acrylate, Divinylbenzol, Trivinylbenzol, Triallylcyanurat, Allyl-(meth)-acrylat, Butadien oder Isopren. Als Acrylatkautschuke kommen auch solche infrage, die einen vernetzten Dienkautschuk aus einem oder mehreren konjugierten Dienen und gegebenenfalls einem ethylenisch ungesättigten Monomer, wie Styrol und/oder Acrylnitril, als Kern enthalten. Andere geeignete Kautschuke sind beispielsweise EPDM-Kautschuke, also Kautschuke aus Ethylen, Propylen und einem unkonjugierten Dien.

Bevorzugte Kautschuke zur Herstellung der Pfropfpolymerisate Ba sind Dien- und Alkylacrylatkautschuke.

Acrylatkautschuke sind besonders vorteilhaft, wenn sie eine Kern-Mantel-Struktur aufweisen, d.h. einen Kern aus einem anderen Polymerisat enthalten, der von einer Hülle aus vernetztem Alkylacrylatkautschuk umgeben ist.

Die Kautschuke liegen im Pfropfpolymerisat Ba in Form wenigstens partiell vernetzter Teilchen einer mittleren Teilchengröße von 0,05 bis 5 µm, insbesonders 0,075 bis 1 µm vor und besitzen Gelgehalte von bevorzugt wenigstens 70 Gew.-%.

Die Pfropfpolymerisate Ba werden durch radikalische Pfropfpolymerisation in Emulsion, Lösung, Masse oder Suspension der eingangs genannten Monomerengemische in Gegenwart dieser Kautschuke hergestellt.

Die Pfropfauflage des Pfropfproduktes Ba aud den obengenantten Polymergemischen wird beispielsweise durch Polymerisation der entsprechenden Monomeren in Gegenwart eines Latex (Emulsion) der Pfropfgrundlage erzeugt. Die Polymerisation kann durch Radikalinitiatoren initiiert werden, z.B. mit Persulfaten, Peroxiden, Percarbonaten, Perestern, insbesondere aber mit wasserlöslichen Initiatoren wie Persulfaten oder Redoxinitiatorsystemen. Diese Polymerisationsverfahren sind bekannt.

Bevorzugte Pfropfauflagen werden erhalten durch Pfropfpolymerisation einer Monomermischung aus 50 bis 95 Gew.-Teilen Styrol, α-Methylstyrol, kernsubstituiertem Styrol, Methylmethacrylat oder Mischungen daraus, und 50 bis 5 Gew.-Teilen (Meth)-Acrylnitril, Methylmethacrylat, Maleinsäureanhydrid, N-substituiertem Maleinimid oder Mischungen daraus.

Bevorzugte Copolymerisate Bb sind solche aus Styrol, α-Methylstyrol, kernsubstituiertem Styrol oder Mischungen daraus mit Acrylnitril, Methacrylnitril, Methylmethacrylat, Maleinsäureanhyrid, N-substituiertem Maleinimid oder Mischungen daraus.

Thermoplastische Copolymerisate mit einer Zusammensetzung gemäß Bb entstehen häufig bei der Pfropfpolymerisation zur Herstellung der Komponente Ba als Nebenprodukte, besonders dann, wenn große Mengen Monomere auf kleine Mengen Kautschuk gepfropft werden.

Die erfindungsgemäß einzusetzende Menge an Copolymerisat Bb von 0 bis 80 Gew.-Teilen, vorzugsweise 0 bis 70 Gew.-Teilen, bezogen auf 100 Gew.-Teile aus A + Ba + Bb, bezieht dieses Nebenprodukt der Pfropfpolymerisation nicht mit ein.

Die Copolymerisate gemäß Komponente Bb sind harzartig, thermoplastisch und kautschukfrei. Besonders bevorzugte Copolymerisate Bb sind solche aus Styrol und/oder α-Methylstyrol mit Acrylnitril und gegebenenfalls mit Methylmethacrylat.

Als kernsubstituierte Styrole seien Halogenstyrole und p-Methylstyrol erwähnt.

Besonders bevorzugte Gewichtsverhältnisse im thermoplastischen Copolymerisat Bb sind 60 bis 80 Gew.-% Styrol und/oder α-Methylstyrol und 40 bis 20 Gew.-%Acrylnitril bzw. Methylmethacrylat.

Die Copolymerisate gemäß Komponente Bb sind bekannt und lassen sich durch radikalische Polymerisation, insbesondere durch Emulsions-, Suspensions-, Lösungs- oder Massepolymerisation herstellen. Die Copolymerisate gemäß Komponente Bb besitzen vorzugsweise Molekulargewichte $\overline{M}w$ (Gewichtsmittel, ermittelt durch Lichtstreuung oder Sedimentation) zwischen 15 000 und 200 000 und Grenzviskositäten zwischen 20 und 110 ml/g (gemessen in Dimethylformamid bei 25 °C).

Die bepfropften Polyether (II) im Sinne der Erfindung werden durch radikalische Polymerisation von 5 - 50 Gew.-%, bevorzugt von 10 - 30 Gew.-%, $C_1$-$C_6$-Alkyl(meth) acrylaten, Cycloalkylacrylaten oder -methacrylaten und gegebenenfalls Styrol oder α-Methylstyrol in Gegenwart von 95 - 50 Gew.-%, bevorzugt 90 - 70 Gew.-% eines Polyalkylenethers hergestellt.

Zur Polymerisation können alle handelsüblichen Radikalstarter, wie z.B. Diacylperoxide, Perester, Dialkylperoxide, Hydroperoxide und aliphatische bzw. araliphatische Azoverbindungen eingesetzt werden. Bevorzugte Radikalstarter, z.B. Azoisobutyronitril, Di-tert.-butylperoxid, tert.-Butylperbenzoat, Dicumylperoxid und 1,3-Bis(tert.-butylperoxyisopropyl)benzol starten die Polymerisation bei Temperaturen von 60 - 140 °C ausreichend schnell. Besonders bevorzugt ist Dibenzoylperoxid.

Die erfindungsgemäß zu bepfropfenden Polyalkylenether sind aus di- und polyfunktionellen (cyclo)-aliphatischen Resten aufgebaut und können in geringem Maße auch olefinische Gruppen enthalten, Geeignet sind Reaktionsprodukte aus Di- oder Polyolen, wie z.B. Ethylenglykol, 1,2-Propylenglykol, Trimethylolpropan, Glycerin, Pentaerythrit, Sorbit und Mannit, und einem oder mehreren Alkylenoxiden, wie Ethylenoxid und Propylenoxid. (Herstellung und Verwendung siehe Ullmanns Encyklopädie der technischen Chemie, 4. Aufl., Bd. 19, S. 31, Verlag Chemie, Weinheim 1980). Dabei werden Polyalkylenglykole mit hohen Anteilen an 1,2-Propylenstrukturen bevorzugt.

Es können sowohl lineare als auch verzweigte Polyalkylenether verwendet werden, wobei mäßig verzweigte Typen bevorzugt werden.

Die erfindungsgemäß zu bepfropfenden Polyalkylenether besitzen Molekulargewichte zwischen 500 und 15.000, bevorzugt zwischen 1000 und 10.000 und besonders bevorzugt zwischen 2000 und 5000.

Die als Monomere für die Pfropfpolymerisaten geeigneten $C_1$-$C_6$-Alkyl(meth)acrylate, Cycloalkylacrylate und -methacrylate können auch funktionelle Gruppen enthalten, z.B. sind 2-Hydroxyethyl(meth)acrylat und 3-Hydroxypropyl(meth)acrylat, verwendbar. Bevorzugt sind Methylmethacrylat, Ethylacrylat, Butylacrylat, Cyclohexylacrylat, Benzylacrylat und 2-Ethylhexylacrylat.

Zusätzlich zu diesen Acrylatmonomeren können auch Styrol und α-Methylstyrol mitverwendet werden.

Die bepfropfend modifizierten Polyalkylenether sind in der Regel mittel- bis hochviskose, nahezu klare Flüssigkeiten oder farblose Suspensionen.

Die erfindungsgemäß bepfropften Polyalkylenether werden nach bekannten Methoden, z.B. durch gemeinsames Kneten, Verwelzen oder Extrudieren in die auszurüstenden Polymere eingearbeitet. Neben den erfindungsgemäßen Antistatika können den Formmassen die üblichen Zusätze wie z.B. Pigmente, Füllstoffe, Stabilisatoren, Gleitmittel, Entformungsmittel und dergleichen zugesetzt werden.

Die so hergestellten Formmassen werden mit den für Thermoplasten üblichen Methoden, z.B. durch Spritzguß, zu Fertigteilen wie Gehäuseteilen für Haushalts- und Elektrogeräte, Profilteilen, Automobilinnenausstattungen, Folien, u.a. Teilen verarbeitet.

Die fertigen Formteile zeichnen sich durch hervorragende antistatische Eigenschaften und belagfreie, glänzende und homogene Oberflächen aus. Die mechanischen Eigenschaften wie Wärmeformbeständigkeit und die Schlagzähigkeit, auch bei tiefen Temperaturen, sind im Vergleich zum unmodifizierten Material praktisch nicht beeinträchtigt. Insbesondere werden Farbe und Thermostabilität des Polymermaterials durch

die erfindungsgemäßen Antistatika nicht negativ beeinflußt.

Beispiele

Polymerisate zur Herstellung von Polymergemisch I:

A) Durch Emulsionspolymerisation hergestellter Pfropfkautschuk aus 50 Gew.-% einer Polybutadiengrundlage mit einem mittleren Teilchendurchmesser ($d_{50}$) von 0,4 µm, auf die 36 Gew.-% Styrol und 14 Gew.-% Acrylnitril aufgepfropft worden sind.

B) Styrol/Acrylnitril (SAN) = 72:28-Copolymerisat mit einem $\overline{M}_w$ von ca. 80 000 mit $\overline{M}_w/\overline{M}_n - 1 \leq 2$.

C) Aromatisches Polycarbonat aus 2,2-Bis-(4-hydroxyphenyl)-propan (Bisphenol A) mit einer relativen Viskosität von 1,26, gemessen in $CH_2Cl_2$ bei 25 °C (0,5 gew.-%ige Lösung).

Polyether II

Allgemeine Herstellvorschrift:

Innerhalb von 2 - 3 h wird ein Vinylmonomeres oder ein Gemisch aus mehreren Vinylmonomeren bei 95 - 100 °C unter Luftausschluß zu einem Polyether und Dibenzoylperoxid (1 Gew.-%) getropft und anschließend das Gemisch bei derselben Temperatur in 5 - 6 h auspolymerisiert.

Beispiel 1

Polyether, hergestellt aus 15 Gew.-Teilen Ethylacrylat und 85 Gew.-Teilen eines Polyhydroxy-polyalkylenethers (OH-Zahl = 28), hergestellt aus Trimethylolpropan, Propylenoxid (87 Teile) und Ethylenoxid (13 Teile).

Beispiel 2

Polyether, hergestellt aus 25 Gew.-Teilen Methylmethacrylat und 75 Gew.-Teilen des in Beispiel 1 verwendeten Polyalkylenethers.

Beispiel 3

24 Gew.-Teile Polymer A, 16 Gew.-Teile Polymer B, 60 Gew.-Teile Polymer C, 1 Gew.-Teil Pentaerythrittetrastearat und 1,5 Gew.-Teile des in Beispiel 1 beschriebenen Polyethers wurden in einem Innenkneter bei 200 °C miteinander vermischt. Das erhaltene Material wurde granuliert und bei 260 °C durch Spritzgießen zu Probekörpern verarbeitet.

| | |
|---|---|
| Folgende Daten wurden erhalten: | |
| $a_k$ bei Raumtemperatur nach DIN 53 453: | 38,5 kJ/m² |
| Vicat B nach DIN 53 460: | 115 °C |
| MFI 260/5 nach DIN 53 735: | 15,4 g/10 Min. |
| Staubfiguren: | kein Belag |

Beispiel 4

Die in Beispiel 3 beschriebene Polymer/Gleitmittel-Mischung wurde hergestellt, wobei als Antistatikum 1,5 Gew.-Teile des in Beispiel 2 beschriebenen Polyethers eingesetzt wurden. Nach analoger Verarbeitung wurden folgende Daten erhalten:

| | |
|---|---|
| $a_k$ bei Raumtemperatur nach DIN 53 453: | 39,5 kJ/m² |
| Vicat B nach DIN 53 460: | 118 °C |
| MFI 260/5 nach DIN 53 735: | 15,8 g/10 Min. |
| Staubfiguren: | kein Belag |

Beispiel 5 (zum Vergleich

Die in Beispiel 3 beschriebenen Mischung aus Polymeren und Gleitmittel wurde ohne Zusatz von Polyether wie dort angegeben verarbeitet. Als Prüfdaten wurden erhalten:

| | |
|---|---|
| $a_k$ bei Raumtemperatur nach DIN 53 453: | 25,9 $kJ/m^2$ |
| Vicat B nach DIN 53 460: | 118 ° C |
| MFI 260/5 nach DIN 53 735: | 12,9 g/10 Min. |
| Staubfiguren: | starker Belag. |

Wie aus den Beispielen 3 und 5 ersichtlich, führt der Zusatz der erfindungsgemäßen Polyether neben der ausgezeichneten Antistatik-Wirksamkeit zu einer deutlichen Steigerung der Kerbschlagzähigkeit sowie einer verbesserten Fließfähigkeit.

**Patentansprüche**
**Patentansprüche für folgende Vertragstaaten : DE, FR, GB, IT, NL**

**1.** Thermoplastische Formmassen aus

I 99,8 - 95 Gew.-% einer Mischung bestehend aus einem aromatischen Polycarbonat, einem Pfropfpolymerisat und gegebenenfalls einem thermoplastischen Vinylpolymerisat und/oder den üblichen Zusätzen und

II 0,2 bis 5 Gew.-% eines bepfropften Polyalkylenethers, der ein Reaktionsprodukt aus Polyolen und einem oder mehreren Alkylenoxiden ist und der durch Pfropfung von 5 bis 50 Gew.-% eines Polymerisats aus $C_1$-$C_6$-Alkyl(meth)acrylaten, Cycloalkylacrylaten oder -methacrylaten auf 95 bis 50 Gew.-% eines Polyalkylenethers (wie oben definiert) mit einem Molekulargewicht von 500 bis 15.000 hergestellt wird,

wobei das Polymergemisch I aus

A) 95 bis 10 Gew.-% eines thermoplastischen aromatischen Polycarbonats oder eines Gemisches mehrerer aromatischer Polycarbonate mit mittleren Gewichtsmittelmolekulargewichten $\overline{M}_w$ von 10.000 bis 200.000, wobei die Polycarbonate solche auf Basis der Diphenole der Formel (II) sind,

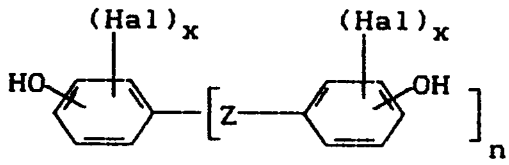

(II)

worin Z eine Einfachbindung, ein $C_1$-$C_5$-Alkylenrest, ein $C_2$-$C_5$-Alkylidenrest, ein $C_5$-$C_6$-Cycloalkylidenrest, -S- oder -$SO_2$-, Hal, Chlor oder Brom, x 0, 1 oder 2 und n 1 oder 0 sind, und gegebenenfalls der Formel (IIa)

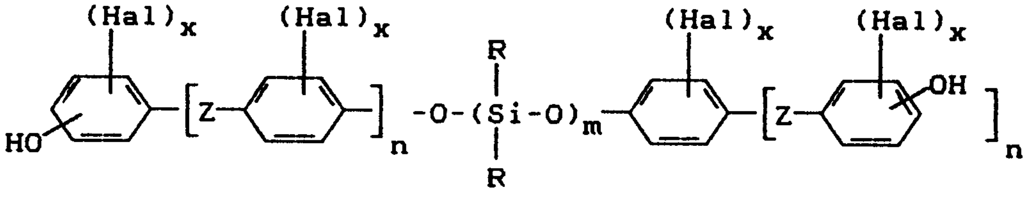

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl bedeuten und m eine ganze Zahl von 5 bis 100 ist, die Diphenole der Formel (IIa) nur für die Herstellung von Copolycarbonaten mit den Diphenolen der Formel (II) eingesetzt werden und der Gewichtsanteil der Diphenole der Formel (IIa) in den Copolycarbonaten 1 bis 20 Gew.-% ist, bezogen auf das

Gesamtgewicht der Diphenole der Formel (II) und (IIa).

B) 5 bis 90 Gew.-% eines Gemisches aus

Ba) 100 bis 20 Gew.-Teilen eines oder mehrerer Pfropfpolymerisate, in denen auf einen Kautschuk (Pfropfgrundlage) Styrol, α-Methylstyrol, Methylmethacrylat oder ein Gemisch von 95 bis 50 Gew.-% Styrol, α-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituiertes Maleinimid, Methylmethacrylat oder Mischungen daraus (Pfropfauflage) pfropfpolymerisiert sind und wobei die Kautschuke in Form wenigstens partiell vernetzter Teilchen einer mittleren Teilchengröße von 0,05 bis 5 µm vorliegen,

Bb) 0 bis 80 Gew.-Teilen eines oder mehrerer thermoplastischer Vinylcopolymerisate

besteht.

**2.** Verfahren zur antistatischen Ausrüstung von Mischungen aus aromatischem Polycarbonat, einem Pfropfpolymerisat und gegebenenfalls einem thermoplastischen Vinylpolymerisat und/oder den üblichen Zusätzen gemäß Anspruch 1, dadurch gekennzeichnet, daß man zu 99,8 bis 95 Gew.-% einer Mischung I 0,2 bis 5 Gew.-% eines bepfropften Polyalkylenethers II gemäß Anspruch 1 zufügt.

**Patentanspruch für folgenden Vertragsstaat : ES**

**1.** Verfahren zur antistatischen Ausrüstung

einer Mischung I bestehend aus einem aromatischen Polycarbonat, einem Pfropfpolymerisat und gegebenenfalls einem thermoplastischen Vinylpolymerisat und/oder den üblichen Zusätzen wobei das Polymergemisch I aus

A) 95 bis 10 Gew.-% eines thermoplastischen aromatischen Polycarbonats oder eines Gemisches mehrerer aromatischer Polycarbonate mit mittleren Gewichtsmittelmolekulargewichten $\overline{M}_w$ von 10.000 bis 200.000, wobei die Polycarbonate solche auf Basis der Diphenole der Formel (II) sind,

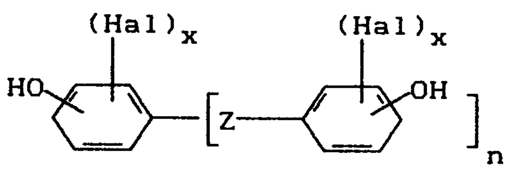

(II)

worin Z eine Einfachbindung, ein $C_1$-$C_5$-Alkylenrest, ein $C_2$-$C_5$-Alkylidenrest, ein $C_5$-$C_6$-Cycloalkylidenrest, -S- oder $-SO_2-$, Hal, Chlor oder Brom, x 0, 1 oder 2 und n 1 oder 0 sind, und gegebenenfalls der Formel (IIa)

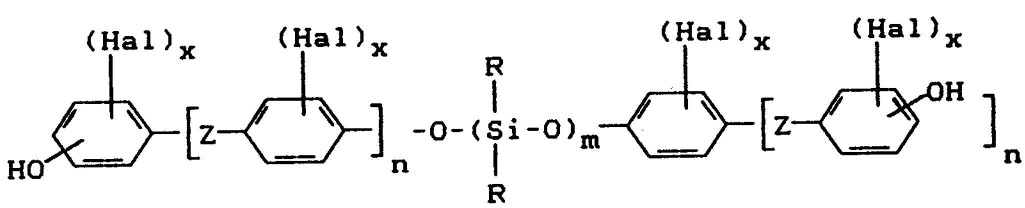

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl bedeuten und m eine ganze Zahl von 5 bis 100 ist, die Diphenole der Formel (IIa) nur für die Herstellung von Copolycarbonaten mit den Diphenolen der Formel (II) eingesetzt werden und der Gewichtsanteil der Diphenole der Formel (IIa) in den Copolycarbonaten 1 bis 20 Gew.-% ist, bezogen auf das Gesamtgewicht der Diphenole der Formel (II) und (IIa),

B) 5 bis 90 Gew.-% eines Gemisches aus

Ba) 100 bis 20 Gew.-Teilen eines oder mehrerer Pfropfpolymerisate, in denen auf einen Kautschuk (Pfropfgrundlage) Styrol, α-Methylstyrol, Methylmethacrylat oder ein Gemisch von 95 bis 50 Gew.-% Styrol, α-Methylstyrol, kernsubstituiertem Styrol, Methylmethacrylat oder Mischungen daraus und 5

bis 50 Gew.-% Acrylnitril, Methacrylnitril, Maleinsäureanhydrid, N-substituiertes Maleinimid, Methylmethacrylat oder Mischungen daraus (Pfropfauflage) pfropfpolymerisiert sind und wobei die Kautschuke in Form wenigstens partiell vernetzter Teilchen einer mittleren Teilchengröße von 0,05 bis 5 µm vorliegen,

Bb) 0 bis 80 Gew.-Teilen eines oder mehrerer thermoplastischer Vinylcopolymerisate besteht,

wobei man zu 99,8 bis 95 Gew.-% einer Mischung I 0,2 bis 5 Gew-.% eines bepfropften Polyalkylenethers II zufügt, der ein Reaktionsprodukt aus Polyolen und einem oder mehreren Alkylenoxiden ist und der durch Pfropfung von 5 bis 50 Gew.-% eines Polymerisats aus $C_1$-$C_6$-Alkyl(meth)acrylaten, Cycloalkylacrylaten oder -methacrylaten auf 95 bis 50 Gew.-% eines Polyalkylenethers (wie oben definiert) mit einem Molekulargewicht von 500 bis 15.000 hergestellt wird.

**Claims**

**Claims for the following Contracting States : DE, FR, GB, IT, NL**

**1.** Thermoplastic moulding compounds of

I 99.8 to 95% by weight of a mixture consisting of an aromatic polycarbonate, a graft polymer and optionally a thermoplastic vinyl polymer and/or the usual additives and

II 0.2 to 5% by weight of a grafted polyalkylene ether which is a reaction product of polyols and one or more alkylene oxides and which is obtained by grafting of 5 to 50% by weight of a polymer of, $C_{1-6}$ alkyl (meth)acrylates, cycloalkyl acrylates or methacrylates onto 95 to 50% by weight of a polyalkylene ether (as defined above) having a molecular weight of 500 to 15,000,

the polymer mixture I consisting of

A) 95 to 10% by weight of a thermoplastic aromatic polycarbonate or of a mixture of several aromatic polycarbonates having average weight average molecular weights $\overline{M}_w$ of 10,000 to 200,000, the polycarbonates being those based on diphenols corresponding to formula II

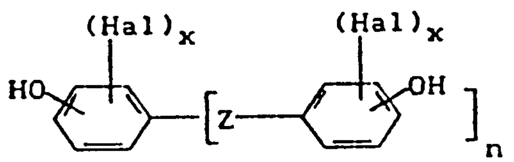

(II)

in which Z is a single bond, a $C_{1-5}$ alkylene radical, a $C_{2-5}$ alkylidene radical, a $C_{5-6}$ cycloalkylidene radical, -S- or $-SO_2-$,

Hal is chlorine or bromine,

x = 0, 1 or 2 and

n = 1 or 0,

and optionally to formula (IIa)

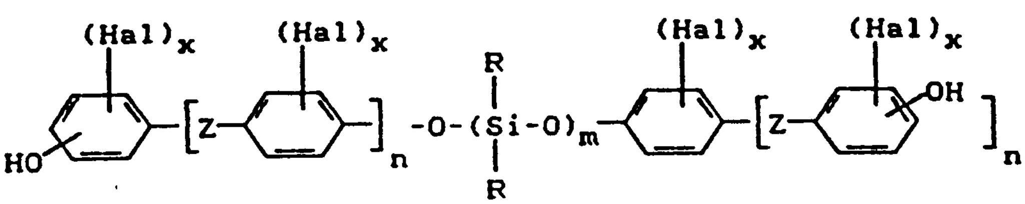

in which Z, Hal, x and m are as defined for formula (II) and the substituents R may be the same or different and represent linear $C_{1-20}$ alkyl, branched $C_{3-20}$ alkyl, $C_{6-20}$ aryl and m is an integer of 5 to 100; the diphenols corresponding to formula (IIa) are only used for the production of copolycarbonates with the diphenols corresponding to formula (II) and the percentage by weight of the diphenols corresponding to formula (IIa) in the copolycarbonates is from 1 to 20% by weight, based on the total weight of the diphenols corresponding to formulae (II) and (IIa),

B) 5 to 90% by weight of a mixture of

Ba) 100 to 20 parts by weight of one or more graft polymers in which styrene, α-methyl styrene, methyl methacrylate or a mixture of 95 to 50% by weight styrene, α-methyl styrene, nucelus-substituted styrene, methyl methacrylate or mixtures thereof and 5 to 50% by weight acrylonitrile, methacrylonitrile, maleic anhydride, N-substituted maleic imide, methyl methacrylate or mixtures thereof (graft shell) is grafted onto a rubber (graft base), the rubbers being present in the form of at least partly crosslinked particles having an average particle size of 0.05 to 5 $\mu$m,
Bb) 0 to 80 parts by weight of one or more thermoplastic vinyl copolymers.

**2.** A process for the antistatic treatment of mixtures of aromatic polycarbonate, a graft polymer and optionally a thermoplastic vinyl polymer and/or the usual additives according to claim 1, characterized in that 0.2 to 5% by weight of a grafted polyalkylene ether II according to claim 1 is added to 99.8 to 95% by weight of a mixture I.

**Claim for the following Contracting State : ES**

**1.** A process for the antistatic treatment of
a mixture I consisting of an aromatic polycarbonate, a graft polymer and optionally a thermoplastic vinyl polymer and/or the usual additives,
the polymer mixture I consisting of
A) 95 to 10% by weight of a thermoplastic aromatic polycarbonate or of a mixture of several aromatic polycarbonates having average weight average molecular weights $\overline{M}_w$ of 10,000 to 200,000, the polycarbonates being those based on diphenols corresponding to formula II

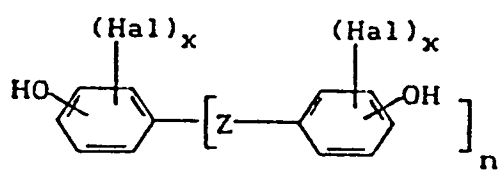

(II)

in which Z is a single bond, a $C_{1-5}$ alkylene radical, a $C_{2-5}$ alkylidene radical, a $C_{5-6}$ cycloalkylidene radical, -S- or $-SO_2-$, Hal is chlorine or bromine, x = 0, 1 or 2 and n = 1 or 0,
and optionally to formula (IIa)

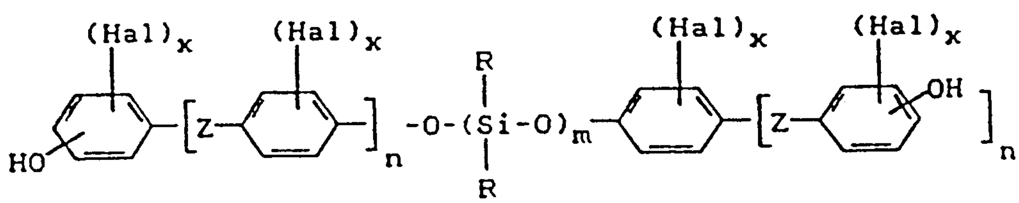

in which Z, Hal, x and m are as defined for formula (II) and the substituents R may be the same or different and represent linear $C_{1-20}$ alkyl, branched $c_{3-20}$ alkyl, $C_{6-20}$ aryl and m is an integer of 5 to 100; the diphenols corresponding to formula (IIa) are only used for the production of copolycarbonates with the diphenols corresponding to formula (II) and the percentage by weight of the diphenols corresponding to formula (IIa) in the copolycarbonates is from 1 to 20% by weight, based on the total weight of the diphenols corresponding to formulae (II) and (IIa),
B) 5 to 90% by weight of a mixture of
Ba) 100 to 20 parts by weight of one or more graft polymers in which styrene, $\alpha$-methyl styrene, methyl methacrylate or a mixture of 95 to 50% by weight styrene, $\alpha$-methyl styrene, nucelus-substituted styrene, methyl methacrylate or mixtures thereof and 5 to 50% by weight acrylonitrile, methacrylonitrile, maleic anhydride, N-substituted maleic imide, methyl methacrylate or mixtures thereof (graft shell) is grafted onto a rubber (graft base), the rubbers being present in the form of at least partly crosslinked particles having an average particle size of 0.05 to 5 $\mu$m,
Bb) 0 to 80 parts by weight of one or more thermoplastic vinyl copolymers
0.2 to 5% by weight of a grafted polyalkylene ether which is a reaction product of polyols and one or more alkylene oxides and which is obtained by grafting of 5 to 50% by weight of a polymer of $C_{1-6}$ alkyl (meth)acrylates, cycloalkyl acrylates or methacrylates onto 95 to 50% by weight of a polyalkylene

ether (as defined above) having a molecular weight of 500 to 15,000 being added to 99.8 to 95% by weight of a mixture I.

**Revendications**

**Revendications pour les Etats contractants suivants : DE, FR, GB, IT, NL**

**1.** Masses à mouler thermoplastiques constituées de

I 99,8-95% en poids d'un mélange formé d'un polycarbonate aromatique, d'un polymérisat greffé et le cas échéant d'un polymérisat vinylique thermoplastique et/ou des additifs classiques et

II 0,2 à 5% en poids d'un polyalkylène-éther greffé qui est un produit de réaction de polyols et d'un ou plusieurs oxydes d'alkylènes et qui est produit par greffage de 5 à 50% en poids d'un polymérisat de (méth)acrylates d'alkyle en $C_1$ à $C_6$, d'acrylates ou de méthacrylates de cycloalkyle sur 95 à 50% en poids d'un polyalkylène-éther (tel que défini ci-dessus) ayant un poids moléculaire de 500 à 15 000,

le mélange de polymères I étant constitué de

A) 95 à 10% en poids d'un polycarbonate aromatique thermoplastique ou d'un mélange de plusieurs polycarbonates aromatiques ayant des moyennes en poids $\overline{M}_p$ du poids moléculaire de 10 000 à 200 000, les polycarbonates étant à base des diphénols de formule (II),

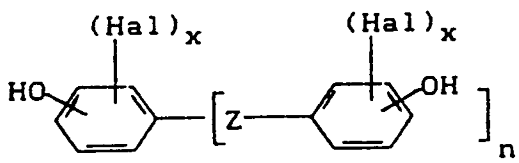

(II)

où Z est une liaison simple, un reste alkylène en $C_1$ à $C_5$, un reste alkylidène en $C_2$ à $C_5$, un reste cycloalkylidène en $C_5$ ou $C_6$, -S- ou $-SO_2-$, Hal représente le chlore ou le brome, x a la valeur 0, 1 ou 2 et n a la valeur 1 ou 0, et le cas échéant de formule (IIa)

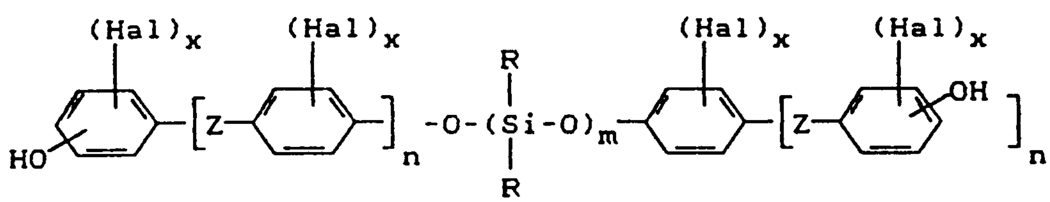

dans laquelle Z, Hal, x et n ont la définition mentionnée pour la formule (II) et les restes R sont identiques ou différents et désignent un reste alkyle linéaire en $C_1$ à $C_{20}$, un reste alkyle ramifié en $C_3$ à $C_{20}$, un reste aryle en $C_6$ à $C_{20}$ et m est un nombre entier de 5 à 100, les diphénols de formule (IIa) ne sont utilisés que pour la préparation de copolycarbonates avec les diphénols de formule (II) et la proportion en poids des diphénols de formule (IIa) dans les copolycarbonates est de 1 à 20% en poids, par rapport au poids total des diphénols de formules (II) et (IIa),

B) 5 à 90% en poids d'un mélange de

Ba) 100 à 20 parties en poids d'un ou plusieurs polymérisats greffés, dans lesquels sont polymérisés par greffage sur un caoutchouc (substrat de greffage), du styrène, de l'α-méthylstyrène, du méthacrylate de méthyle ou un mélange de 95 à 50% en poids de styrène, d'α-méthylstyrène, de styrène substitué sur le noyau, de méthacrylate de méthyle ou de leurs mélanges et 5 à 50% en poids d'acrylonitrile, de méthacrylonitrile, d'anhydride d'acide maléique, de maléimide substitué sur l'azote, de méthacrylate de méthyle ou de leurs mélanges (greffe) et les caoutchoucs sont présents sous forme de particules au moins partiellement réticulées ayant un diamètre moyen de 0,05 à 5 µm,

Bb) 0 à 80 parties en poids d'un ou plusieurs copolymérisats vinyliques thermoplastiques.

**2.** Procédé d'apprêtage antistatique de mélanges de polycarbonate aromatique, d'un polymérisat de greffage et le cas échéant d'un polymérisat vinylique thermoplastique et/ou des additifs classiques suivant la revendication 1, caractérisé en ce qu'on ajoute 0,2 à 5% en poids d'un polyalkylèneéther

greffé II suivant la revendication 1 à 99,8-95% en poids d'un mélange I.

**Revendication pour l'Etat contractant suivant : ES**

1. Procédé d'apprêtage antistatique d'un mélange I constitué d'un polycarbonate aromatique, d'un polymérisat greffé et le cas échéant d'un polymérisat vinylique thermoplastique et/ou des additifs classiques, dans lequel le mélange de polymères I est constitué de

A) 95 à 10% en poids d'un polycarbonate aromatique thermoplastique ou d'un mélange de plusieurs polycarbonates aromatiques ayant des moyennes en poids $\overline{M}_p$ du poids moléculaire de 10 000 à 200 000, les polycarbonates étant à base des diphénols de formule (II),

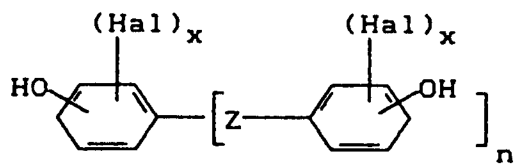

(II)

où Z est une liaison simple, un reste alkylène en $C_1$ à $C_5$, un reste alkylidène en $C_2$ à $C_5$, un reste cycloalkylidène en $C_5$ ou $C_6$, -S- ou $-SO_2-$,

Hal représente le chlore ou le brome, x a la valeur 0, 1 ou 2 et n a la valeur 1 ou 2, et le cas échéant de formule (IIa)

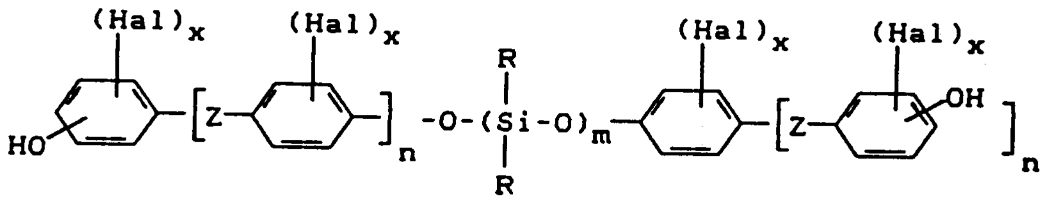

dans laquelle Z, Hal, x et n ont la définition mentionnée pour la formule (II) et les restes R sont identiques ou différents et désignent un reste alkyle linéaire en $C_1$ à $C_{20}$, un reste alkyle ramifié en $C_3$ à $C_{20}$, un reste aryle en $C_6$ à $C_{20}$ et m est un nombre entier de 5 à 100, les diphénols de formule (IIa) ne sont utilisés que pour la production de copolycarbonates avec les diphénols de formule (II) et la proportion en poids des diphénols de formule (IIa) dans les copolycarbonates est de 1 à 20% en poids, par rapport au poids total des diphénols de formules (II) et (IIa),

B) 5 à 90% en poids d'un mélange de

Ba) 100 à 20 parties en poids d'un ou plusieurs polymérisats greffés, dans lesquels sont polymérisés par greffage sur un caoutchouc (substrat de greffage), du styrène, de l'α-méthylstyrène, du méthacrylate de méthyle ou un mélange de 95 à 50% en poids de styrène, d'α-méthylstyrène, de styrène substitué sur le noyau, de méthacrylate de méthyle ou de leurs mélanges et 5 à 50% en poids d'acrylonitrile, de méthacrylonitrile, d'anhydride d'acide maléique, de maléimide substitué sur l'azote, de méthacrylate de méthyle ou de leurs mélanges (greffe) et les caoutchoucs sont présents sous forme de particules au moins partiellement réticulées ayant un diamètre moyen de 0,05 à 5 µm,

Bb) 0 à 80 parties en poids d'un ou plusieurs copolymérisats vinyliques thermoplastiques,

dans lequel on ajoute à 99,8-95% en poids d'un mélange I, 0,2 à 5% en poids d'un polyalkylène-éther greffé II qui est un produit de réaction de polyols ou d'un ou plusieurs oxydes d'alkylènes et qui est préparé par greffage de 5 à 50% en poids d'un polymérisat de (méth)acrylates d'alkyle en $C_1$ à $C_6$, d'acrylates ou de méthacrylates de cycloalkyle sur 95 à 50% en poids d'un polyalkylène-éther (tel que défini ci-dessus) ayant un poids moléculaire de 500 à 15 000.